# EUROPEAN PATENT SPECIFICATION

(11) **EP 0 792 757 B1**
(45) Date of publication and mention of the grant of the patent: **06.06.2001**
(21) Application number: 96200512.0
(22) Date of filing: 27.02.1996
(51) Int. Cl.: B41M 5/38, C09B 26/06, C09B 29/00, C09B 55/00

(54) **Dye donor element for use in thermal transfer printing**
Farbstoffdonorelement zum Gebrauch in einem thermischen Übertragungsdruckverfahren
Elément donneur de colorant pour utilisation dans un procédé pour l'impression par le transfert thermique

(43) Date of publication of application: 03.09.1997
(73) Proprietor: AGFA-GEVAERT N.V., 2640 Mortsel (BE)
(72) Inventor: Vanmaele, Luc, Septestraat 27, 2640 Mortsel (BE)

(56) References cited:
- EP-A- 0 340 723
- EP-A- 0 509 302
- EP-A- 0 512 548
- EP-A- 0 691 213
- WO-A-94/08797
- DE-A- 2 305 617
- FR-A- 2 371 490
- US-A- 5 356 857
- US-A- 5 369 081

## Description

### 1. Field of the invention.

The present invention relates to dye-donor elements for use in thermal dye transfer methods and in particular to thermal dye sublimation transfer or thermal dye diffusion transfer and to dyes for use in said dye-donor elements.

### 2. Background of the invention.

Thermal dye sublimation transfer or thermal dye diffusion transfer is a recording method in which a dye-donor element provided with a dye layer containing sublimable dyes having heat transferability is brought into contact with a receiver sheet or receiver element and selectively, in accordance with a pattern information signal, is heated by means of a thermal printing head provided with a plurality of juxtaposed heat-generating resistors, whereby dye is transferred from the selectively heated regions of the dye-donor element to the receiver sheet and forms a pattern thereon, the shape and density of which are in accordance with the pattern and intensity of heat applied to the dye-donor element.

A dye-donor element for use according to thermal dye sublimation transfer usually comprises a very thin support e.g. a polyester support, one side of which is covered with a dye layer comprising the printing dyes. Usually, an adhesive or subbing layer is provided between the support and the dye layer. Normally, the opposite side is covered with a slipping layer that provides a lubricated surface against which the thermal printing head can pass without suffering abrasion. An adhesive layer may be provided between the support and the slipping layer.

The dye layer can be a monochromic dye layer or it may comprise sequential repeating areas of differently coloured dyes e.g. dyes having a cyan, magenta, yellow, and optionally black hue. When a dye-donor element containing three or more primary colour dyes is used, a multicolour image can be obtained by sequentially performing the dye transfer process steps for each colour.

A primary coloured dye layer e.g. a magenta or cyan or yellow dye layer may comprise only one primary coloured dye (a magenta, cyan or yellow dye respectively) or may comprise a mixture of two or more primary colour dyes of the same hue (two magenta, two cyan or two yellow dyes respectively).

Any dye can be used in such a dye layer provided it is easily transferable to the dye-image-receiving layer of the receiver sheet or element by the action of heat.

Typical and specific examples of dyes for use in thermal dye sublimation transfer have been described in e.g. EP 209,990, EP 209,991, EP 216,483, EP 218,397, EP 227,095, EP 227,096, EP 229,374, EP 235,939, EP 247,737, EP 257,577, EP 257,580, EP 258,856, EP 400,706,EP 279,330, EP 279,467, EP 285,665, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489.

EP 512,548 describes dyes having aminopyridyl moieties that can be used in thermal transfer sheets.

In spite of the many dyes that already exist, there is still a continuous search for novel dyes and especially for dyes that are suited for use in dye-donor elements for thermal dye sublimation transfer printing, preferably dyes with low melting points and a good solubility in ecologically acceptable solvents.

### 3. Summary of the invention.

It is therefore an object of the present invention to provide novel dye-donor elements for use according to thermal dye transfer printing methods.

It is another object of the present invention to provide novel dyes that can be used in said dye-donor elements.

The above mentioned objects are realised by dye-donor elements having the specific features defined in claim 1. Specific features for preferred embodiments of the invention are disclosed in the dependent claims.

Further advantages and embodiments of the present invention will become apparent from the following description.

A non-exhaustive list of dyes corresponding to general formula (I) of claim 1 is given in Table 1, 2 and 3 hereinafter.

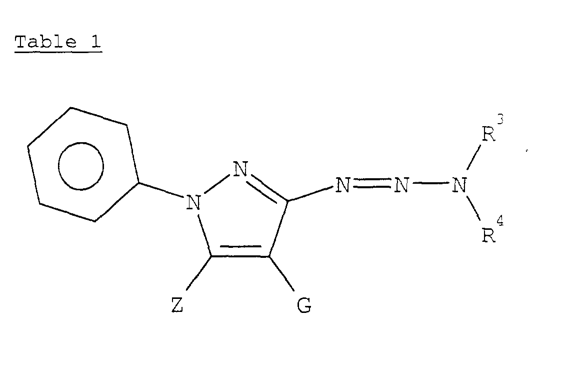

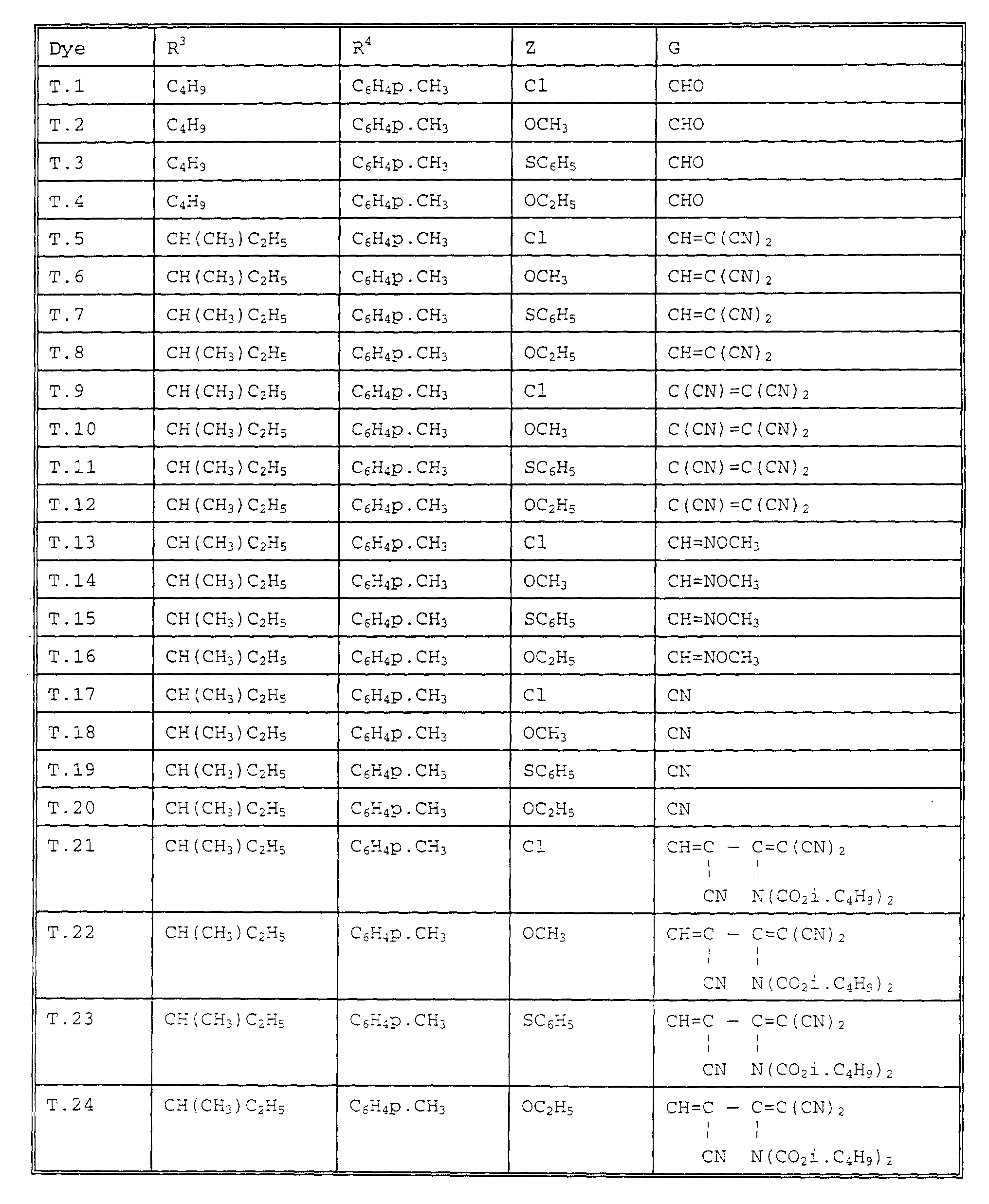

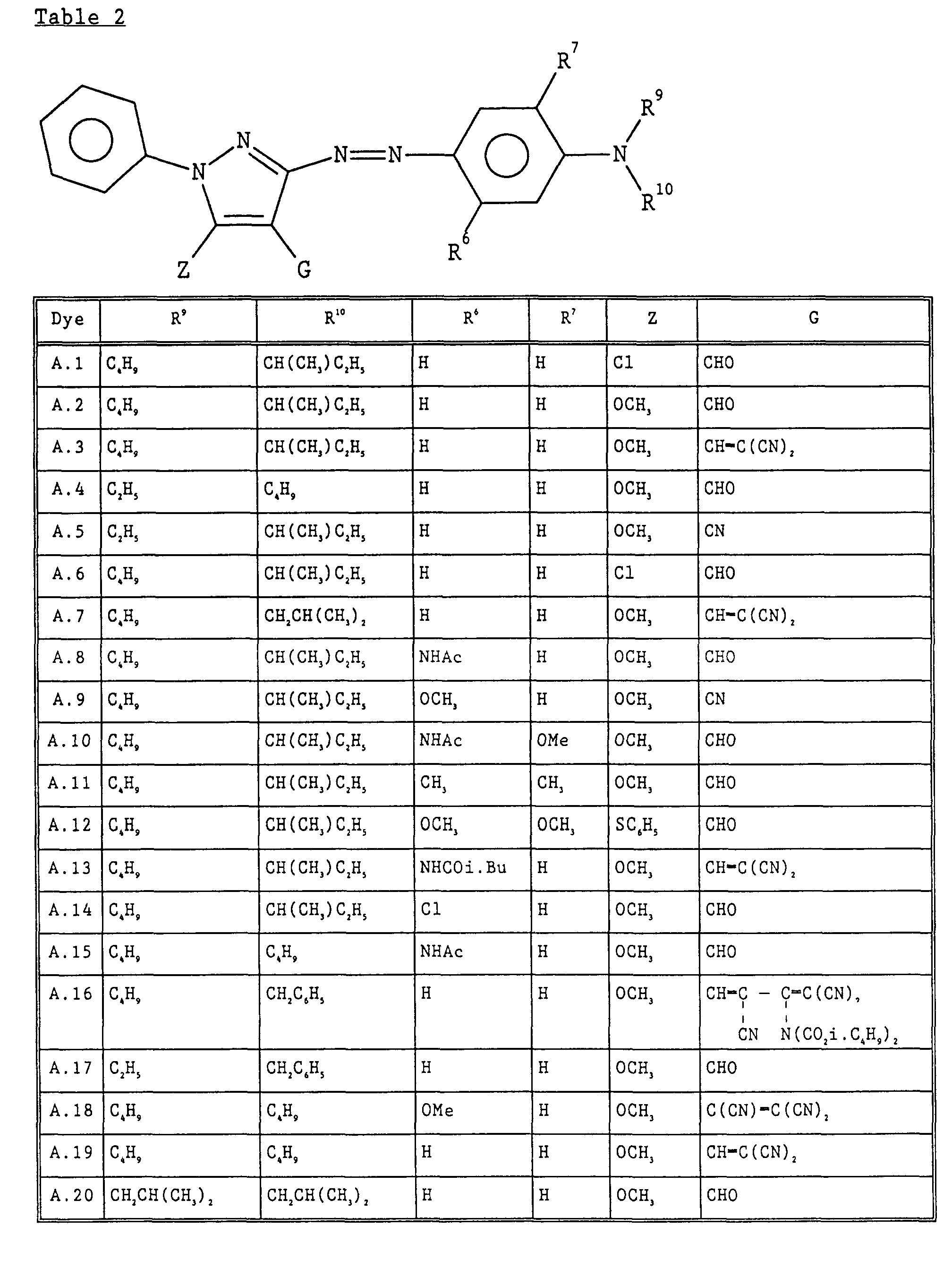

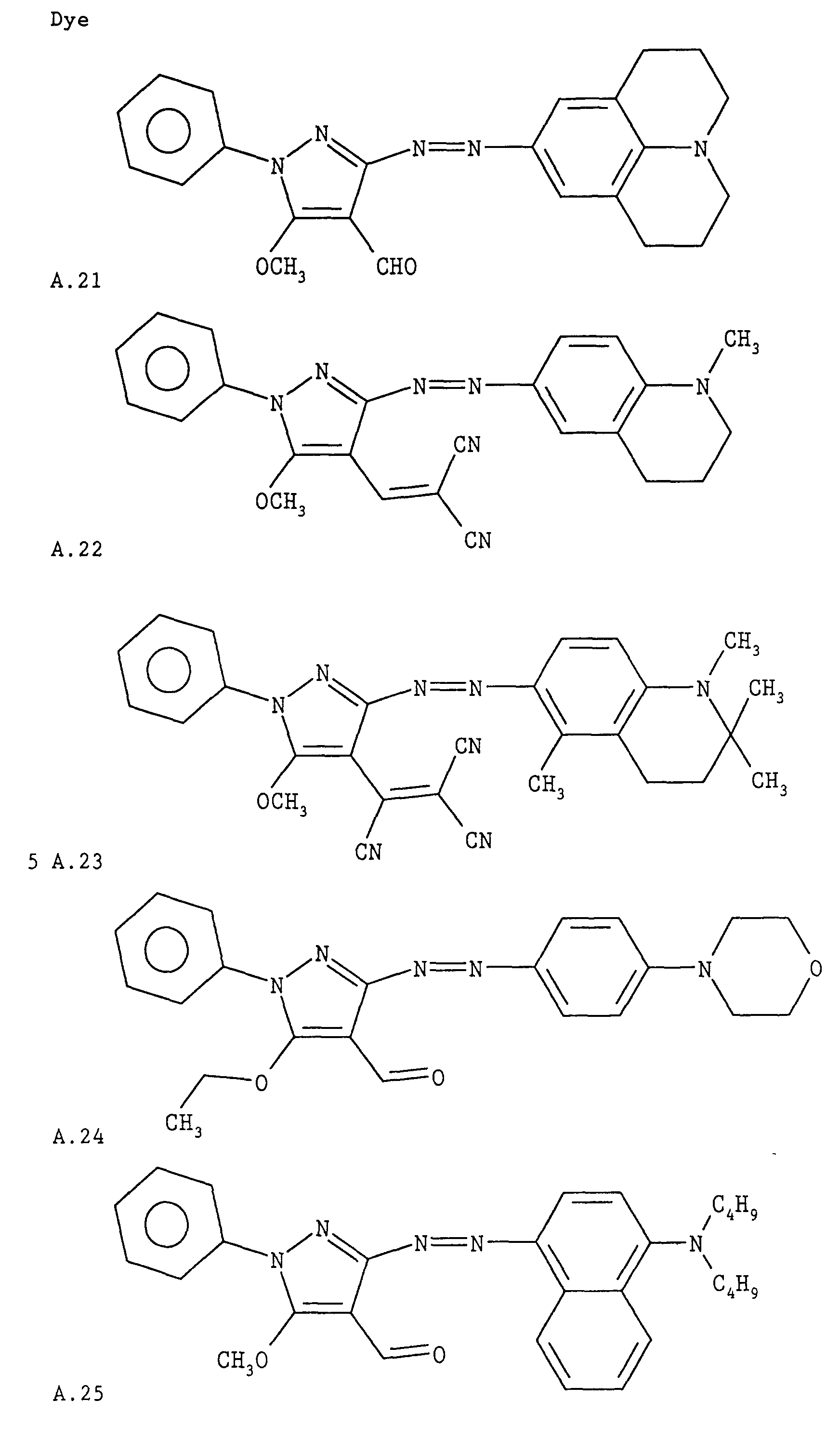

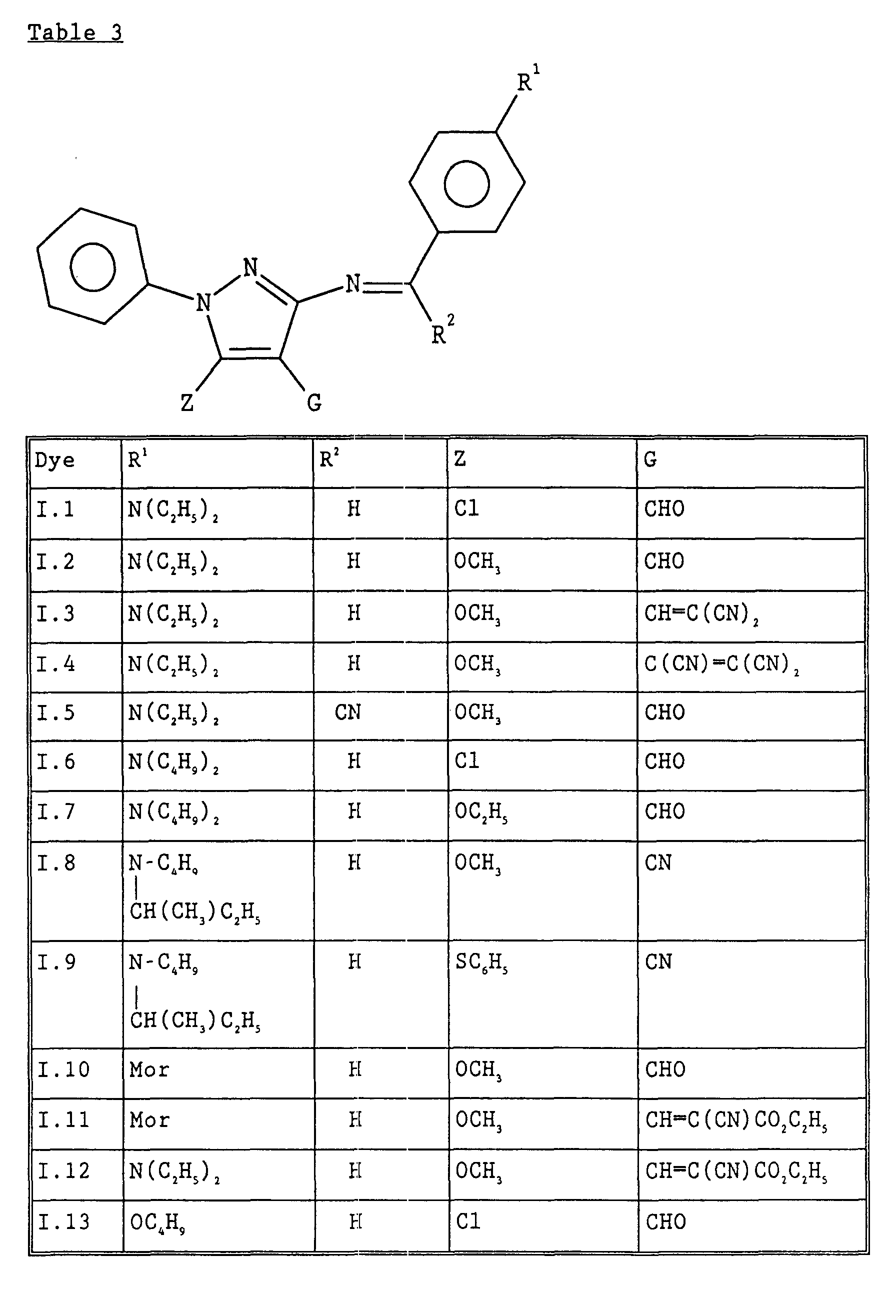

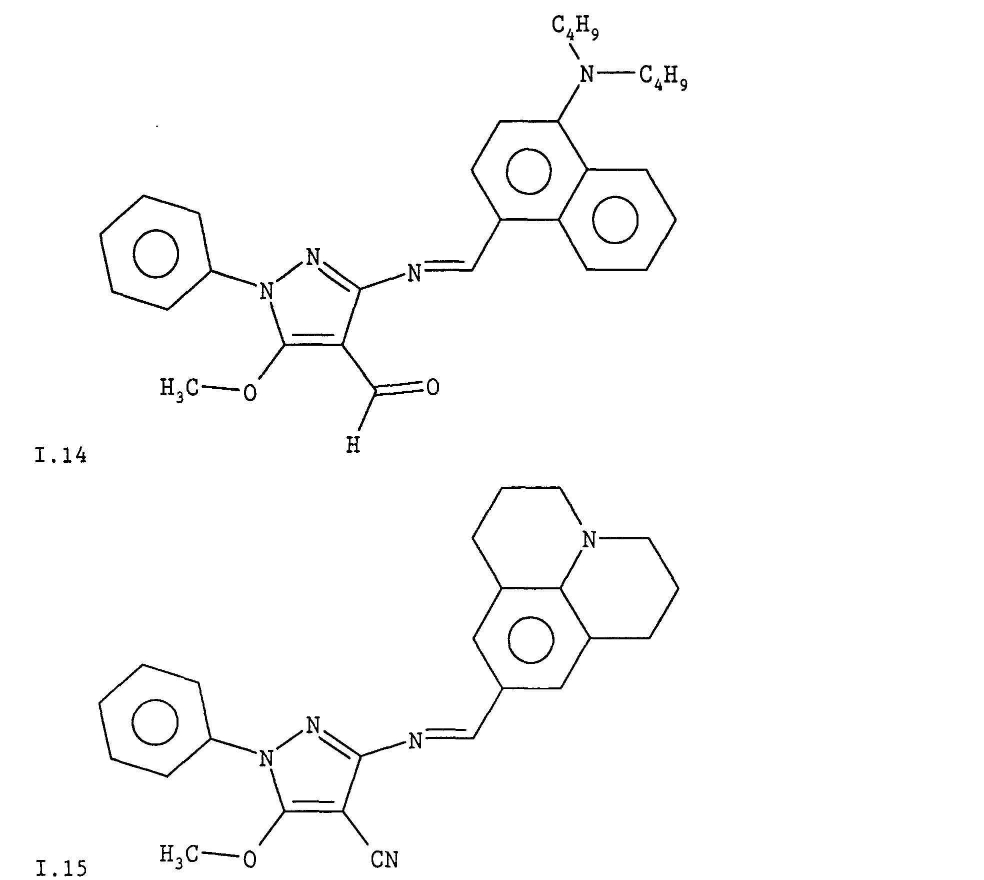

In table 3 the meaning of Mor is as follows: 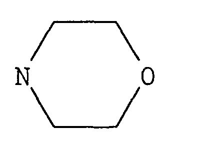 wherein the linking of the group is at the nitrogen.

The synthesis of the dyes according to formula I will become apparent from the examples given below.

### Example 1 : Synthesis of dye A.2

Dye A.2 is prepared according to scheme 1.

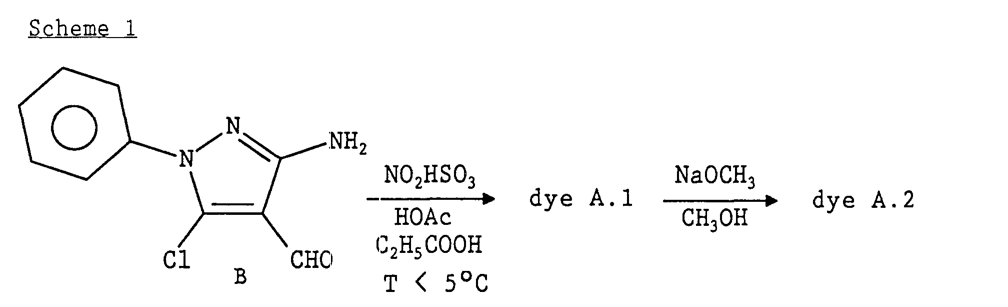

Compound B can be prepared according to literature procedures, e.g. S.B. Barmela, Indian Journal of Chemistry, Vol. 14B, pp. 668-670 (1976).

Dye A.1 is prepared through diazotization of compound B with nitrosylsulfuric acid as described in US 4,395,544 and US 4,505,857; mp = 132° C.

Dye A.2 is prepared from dye A.1 according to US 5,356,857; mp= 72° C; λₘₐₓ(CH₃OH) = 468 nm, εₘₐₓ = 39024 1⁻¹ mol⁻¹ cm⁻¹.

All the dyes from table 2 are prepared in the same way.

### Example 2 : Synthesis of dye T.1

Dye T.1 is prepared according to the synthetic procedures mentioned in US 5,356,857. Dye T.1 : mp = 104° C; λₘₐₓ(CH₃OH) = 352 nm, εₘₐₓ = 17384 1 mol⁻¹ cm⁻¹. All other dyes from table 1 are prepared according to US 5,356,857.

The dyes mentioned in table 3 are prepared according to the methods described in EP 691 213.

The dyes can be used as filter dyes e.g. for silver halide colour photographic materials and also as antihalation dyes.

The dyes corresponding to the general formula (I) defined above can be used in inkjet printing, resistive ribbon printing, in inks e.g. for laser applications, in textile, in lacquers, and in paints. They can also be used for transfer printing on fabrics and for constructing filter array elements. According to a preferred embodiment of the present invention the dyes are used in the dye layer of a dye-donor element for thermal dye sublimation transfer.

To improve the stability of the dyes to light, the use of a metal complex of the dye e.g. a Ni or Co complex is also effective.

The dye layer is formed preferably by adding the dye, a polymeric binder medium, and other optional components to a suitable solvent or solvent mixture, dissolving or dispersing the ingredients to form a coating composition that is applied to a support, which may have been provided first with an adhesive or subbing layer, and dried.

The dye layer thus formed has a thickness of about 0.2 to 5.0 µm, preferably 0.4 to 2.0 µm, and the amount ratio of dye to binder ranges from 9:1 to 1:3 by weight, preferably from 2:1 to 1:2 by weight.

As polymeric binder the following can be used : cellulose derivatives, such as ethyl cellulose, hydroxyethyl cellulose, ethylhydroxy cellulose, ethylhydroxyethyl cellulose, hydroxypropyl cellulose, methyl cellulose, cellulose nitrate, cellulose acetate formate, cellulose acetate hydrogen phthalate, cellulose acetate, cellulose acetate propionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, polymethyl methacrylate and styrene-acrylate copolymers; polyester resins; polycarbonates; copolystyrene-acrylonitrile; polysulfones; polyphenylene oxide; organosilicones, such as polysiloxanes; epoxy resins and natural resins, such as gum arabic. Preferably, the binder for the dye layer of the present invention comprises cellulose acetate butyrate of copolystyrene-acrylonitrile.

The dyes in accordance with the present invention may be used in admixture with other known dyes for thermal sublimation printing. In particular they can be used in combination with tricyano- and dicyanovinyl dyes as disclosed in WO-A-9 411 200, EP-A 0 594 239 and with malononitrile dimer derived dyes as disclosed in EP-A-400706. The present dyes may also be used in admixture with azo dyes e.g. disperse azo dyes, anthraquinone dyes, indoaniline dyes, azomethine dyes. Examples of dyes that can be used in combination with the dyes of the present invention are disclosed in e.g. EP-A-0 602 714, EP 209,990, EP 209,991, EP 216,483, EP 218,397, EP 227,095, EP 227,096, EP 229,374, EP 235,939, EP 247,737, EP 257,577, EP 257,580, EP 258,856, EP 279,330, EP 279,467, EP 285,665, EP 400,706, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489, US 4,839,336, US 5,168,094, US 5,147,844, US 5,177,052, US 5,175,069, US 5,155,088, US 5,166,124, US 5,166,129, US 5,166,128, US 5,134,115, US 5,132,276, US 5,132,275, US 5, 132,274, US 5,132,273, US 5,132,268, US 5,132,267, US 5,126,314, US 5,126,313, US 5,126,312, US 5,126,311, US 5,134,116, US 4,975,410, US 4,885,272, US 4,886,029, etc..

The coating layer may also contain other additives, such as curing agents, preservatives, organic or inorganic fine particles, dispersing agents, antistatic agents, defoaming agents, viscosity-controlling agents, these and other ingredients have been described more fully in EP 133,011, EP 133,012, EP 111,004, and EP 279,467.

Any material can be used as the support for the dye-donor element provided it is dimensionally stable and capable of withstanding the temperatures involved, up to 400°C over a period of up to 20 msec, and is yet thin enough to transmit heat applied on one side through to the dye on the other side to effect transfer to the receiver sheet within such short periods, typically from 1 to 10 msec. Such materials include polyesters such as polyethylene terephthalate, polyamides, polyacrylates, polycarbonates, cellulose esters, fluorinated polymers, polyethers, polyacetals, polyolefins, polyimides, glassine paper and condenser paper. Preference is given to a support comprising polyethylene terephthalate. In general, the support has a thickness of 2 to 30 µm. The support may also be coated with an adhesive or subbing layer, if desired.

The dye layer of the dye-donor element may be coated on the support or printed thereon by a printing technique such as a gravure process.

A dye barrier layer comprising a hydrophilic polymer may also be employed between the support and the dye layer of the dye-donor element to enhance the dye transfer densities by preventing wrong-way transfer of dye backwards to the support. The dye barrier layer may contain any hydrophilic material that is useful for the intended purpose. In general, good results have been obtained with gelatin, polyacrylamide, polyisopropyl acrylamide, butyl methacrylate-grafted gelatin, ethyl methacrylate-grafted gelatin, ethyl acrlate-grafted gelatin, cellulose monoacetate, methylcellulose, polyvinyl alcohol, polyethyleneimine, polyacrylic acid, a mixture of polyvinyl alcohol and polyvinyl acetate, a mixture of polyvinyl alcohol and polyacrylic acid, or a mixture of cellulose monoacetate and polyacrylic acid. Suitable dye barrier layers have been described in e.g. EP 227091 and EP 228065. Certain hydrophilic polymers, e.g. those described in EP 227091, also have an adequate adhesion to the support and the dye layer, so that the need for a separate adhesive or subbing layer is avoided. These particular hydrophilic polymers used in a single layer in the dye-donor element thus perform a dual function, hence are referred to as dye-barrier/subbing layers.

Preferably the reverse side of the dye-donor element has been coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. The surface-active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C2-C20 aliphatic acids. Examples of liquid lubricants include silicone oils, synthetic oils, saturated hydrocarbons and glycols. Examples of solid lubricants include various higher alcohols such as stearyl alcohol, fatty acids and fatty acid esters. Suitable slipping layers have been described in e.g. EP 138483, EP 227090, US 4567113, US 4572860, US 4717711. Preferably the slipping layer comprises a styrene-acrylonitrile copolymer or a styrene-acrylonitrile-butadiene copolymer or a mixture thereof or a polycarbonate as described in EP-A-527520 as binder and a polysiloxane-polyether copolymer or polytetrafluoroethylene or a mixture thereof as lubicrant in an amount of 0.1 to 10% by weight of the binder or binder mixture.

The support for the receiver sheet that is used with the dye-donor element may be a transparant film of e.g. polyethylene terephthalate, a polyether sulfone, a polyimide, a cellulose ester or a polyvinyl alcohol-co-acetal. The support may also be a reflective one such as baryta-coated paper, polyethylene-coated paper or white polyester i.e. white-pigmented polyester. Blue-coloured polyethylene terephthalate film can also be used as support.

To avoid poor adsorption of the transferred dye to the support of the receiver sheet or receiver element this support must be coated with a special surface, a dye-image-receiving layer, into which the dye can diffuse more readily. The dye-image-receiving layer may comprise, e.g. a polycarbonate, a polyurethane, a polyester, a polyamide, polyvinyl chloride, polystyrene-co-acrylonitrile, polycaprolactone or mixtures thereof. The dye-image receiving layer may also comprise a heat-cured product of poly(vinylchloride/co-vinylacetate/co-vinylalcohol) and polyisocyanate. Suitable dye-receiving layers have been described in e.g. EP 133011, EP 133012, EP 144247, EP 227094, EP 228066.

In order to improve the light-fastness and other stabilities of recorded images, UV absorbers, singlet oxygen quenchers such as HALS-compounds (Hindered Amine Light Stabilizers) and/or antioxidants can be incorporated into the receiving layer.

The dye layer of the dye-donor element or the dye-image-receiving layer of the receiver sheet may also contain a releasing agent that aids in separating the dye-donor element from the receiving sheet after transfer. The releasing agents can also be incorporated in a separate layer on at least part of the dye layer and/or of the dye-image-receiving layer. Suitable releasing agents are solid waxes, fluorine- or phosphate-containing surface-active agents and silicone oils. Suitable releasing agents have been described in e.g. EP 133012, JP 85/19138 and EP 227092.

The dye-donor elements according to the invention are used to form a dye transfer image, which process comprises placing the dye layer of the dye-donor element in face-to-face relation with the dye-image-receiving layer of the receiver sheet or receiver element and image-wise heating preferably from the back of the dye-donor element. The transfer of the dye is accomplished by heating for about several milliseconds at a temperature of 400°C.

When the process is performed for but one single color, a monochrome dye transfer image is obtained. A multicolor image can be obtained by using a dye-donor element containing three or more primary colour dyes and sequentially performing the process steps described above for each colour. After the first dye has been transferred, the elements are peeled apart. The above sandwich of dye-donor element and receiver sheet is formed on three occasions during the time when heat is applied by the thermal printing head. After the first dye has been transferred, the elements are peeled apart. A second dye-donor element (or another area of the dye-donor element with a different dye area) is then brought in register with the dye-receiving element and the process is repeated. The third colour and optionally further colours are obtained in the same manner.

In addition to thermal heads, laser light, infrared flash or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat e.g. carbon black.

Alternatively, the support of the dye-donor element may be an electrically resistive ribbon consisting of e.g. a multilayer structure of a carbon loaded polycarbonate coated with a thin aluminum film. Current is injected into the resistive ribbon by electrically adressing a printing head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology compared to the thermal head technology, according to which the various elements of the thermal head get hot and must cool down before the head can move to the next printing position.

The following example illustrates the invention in more detail without limiting, however, the scope thereof.

### Example 3

Receiver sheets were prepared by coating a subbed polyethylene terephthalate film having a thickness of 175 µm with a dye-image-receiving layer from a solution in ethyl methyl ketone of 3,6 g/m² of poly(vinyl chloride/co-vinyl acetate/co-vinyl alcohol) (Vinylite™ VAGD supplied by Union Carbide), 0,336 g/m² of diisocyanate (Desmodur™ N75 supplied by Bayer AG), and 0,2 g/m² of hydroxy-modified polydimethylsiloxane (Tegomer™ H SI 2111 supplied by Goldschmidt).

Dye-donor elements for use according to thermal dye sublimation transfer were prepared as follows:

A solution comprising 0.5 % by weight of dye and 0.5 % by weight of copoly(styrene-acrylonitrile) (Luran™ 388S, supplied by BASF, Germany) as binder in ethyl methyl ketone was prepared.

From this solution a dye layer having a wet thickness of 100 um was coated on a polyethylene terephthalate film support having a thickness of 6 µm and carrying a conventional subbing layer. The resulting dye layer was dried by evaporation of the solvent.

The opposite side of -the film support was coated with a subbing layer of a copolyester comprising ethylene glycol, adipic acid, neopentyl glycol, terephthalic acid, isophthalic acid, and glycerol.

The resulting subbing layer was covered with a solution in methyl ethyl ketone of 0.5 g/m² of a polycarbonate having the following structural formula to form a heat-resistant layer :

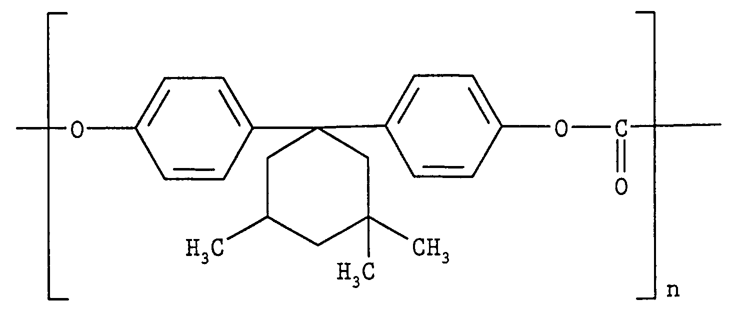

Finally, a top layer of polyether-modified polydimethylsiloxane (Tegoglide™ 410, Goldschmidt) was coated from a solution in isopropanol on the resulting heat-resistant polycarbonate layer.

The dye-donor element was printed in combination with a receiver sheet in a Mitsubishi colour video printer CP100E.

The receiver sheet was separated from the dye-donor element and the colour density value of the recorded image was measured in reflection by means of a Macbeth TR 924 densitometer in the red, green, and blue region in Status A mode.

The results are listed in Table 4.

**Table 4**

| Dye No. | Max.Dens. | Spectral absorption in Status A filter behind | | |
|---|---|---|---|---|
| | | Red | Green | Blue |
| A.1 | 175 | 14 | 49 | 150 |
| A.2 | 219 | 14 | 43 | 150 |

## Claims

1. Dye-donor element for use according to thermal dye transfer methods, said dye-donor element comprising a support having thereon a dye layer comprising a polymeric binder and a dye corresponding to the following general formula (I): 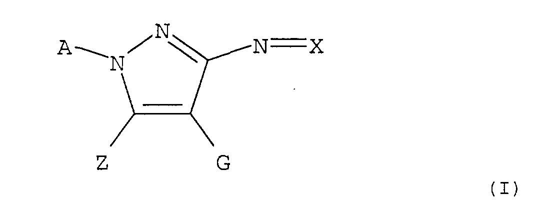 wherein :
X represents N-R or 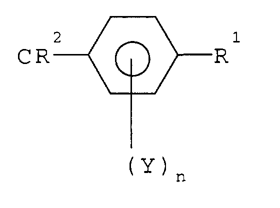
R¹ represents NR³R⁴, OR¹² or SR¹²;
R² represents hydrogen, cyano, COR¹³, CO₂R¹³, CONR¹⁴R¹⁵ or SO₂R¹⁶; or
R¹ and/or R² and one of the Y-substituents together with the atoms to which they are attached represent the necessary atoms to form a 5- or 6-membered, fused-on heterocyclic ring ;
R represents NR³R⁴ or the following formula: 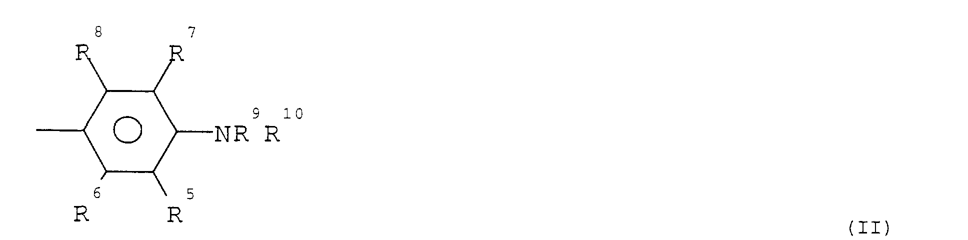 wherein R³ and R⁴ each independently represent hydrogen, an alkyl group, an alkenyl group, an alkynyl group, an aryl group, a heterocyclic group or R³ and R⁴ together with the nitrogen atom to which they are attached represent the atoms necessary to complete a heterocyclic ring;
R⁵, R⁶, R⁷, and R⁸ each independently represent hydrogen, an alkyl group, an alkenyl group, an alkynyl group, an aryl group, an alkoxy group, an alkylthio group, an arylthio group, an aryloxy group, a carbamoyl group, a sulfamoyl group, hydroxy, SH, an amino group, a halogen, NO₂, CN, NHSO₂R¹¹, NHCOR¹¹, OSO₂R¹¹, OCOR¹¹, COR¹¹
or R⁷ and R⁸ together and/or R⁵ and R⁶ together with the atoms to which they are attached represent the necessary atoms to complete a ring or R⁷ and R⁹ together with the atoms to which they are attached and/or R⁵ and R¹⁰ together with the atoms to which they are attached represent the necessary atoms to form a heterocyclic ring;
R¹¹ represents an alkyl group, an alkenyl group, an alkynyl group, an aryl group, an alkyloxy group, an aryloxy group, an alkylthio group, an arylthio group, an amino group or a heterocyclic group;
R⁹ and R¹⁰ each independently represent hydrogen, an alkyl group, an alkenyl group, an alkynyl group, an aryl group, a heterocyclic group or R⁹ and R¹⁰ together with the atoms to which they are attached represent the necessary atoms to form a heterocyclic ring.
Y represents a substituent;
n represents 0, 1, 2, 3 or 4, the substituents being the same or different when n is greater than 1 or two or more Y substituents can form an annelated ring system;
R¹², R¹³, R¹⁴ and R¹⁵ each independently represent hydrogen, an alkyl group, an alkenyl group, an alkynyl group, an aryl group, a heterocyclic ring or R¹⁴ and R¹⁵ together with the atoms to which they are attached represent the necessary atoms to form a 5- or 6- membered ring or R¹² or R¹³ or R¹⁴ or R¹⁵ together with one of the Y-substituents and the atoms to which they are attached represent the necessary atoms to form a 5- or 6-membered fused-on heterocyclic ring;
R¹⁶ represents hydroxy, an alkoxy group, an aryloxy group, NR¹⁷R¹⁸, an aryl group, an alkyl group, an alkenyl group, an alkynyl group, or R¹⁶ together with one of the Y-substituents and the atoms to which they are attached represent the necessary atoms to form a 5- or 6-membered fused-on heterocyclic ring;
R¹⁷ and R¹⁸ each independently represent hydrogen, an alkyl group, an alkenyl group, an alkynyl group, an aryl group, a heterocyclic ring or R¹⁷ and R¹⁸ together with the atoms to which they are attached represent the necessary atoms to form a 5- or 6-membered ring;
A represents an alkyl group, an alkenyl group, an alkynyl group or an aryl group;
G represents hydrogen, CN or R¹⁹-C=B;
Z represents hydrogen, halogen, CN, an alkyl group, an alkenyl group, an alkynyl group, an aryl group, an amino group, an alkoxy group, a thioalkoxy group, a sulphone group, or G and Z together with the atoms to which they are attached represent the atoms necessary to form an alicyclic, aromatic or heteroaromatic ring;
B represents O, N-R²⁰, CR²¹R²²;
R¹⁹ represents hydrogen, an alkyl group, an alkenyl group, an alkynyl group, an aryl group, an aryloxy group, an alkoxy group, such as methoxy or ethoxy, a alkylthio group, an amino group, an electron withdrawing group or R¹⁹ and R²¹, R²² or R²⁰ together with the atoms to which they are attached represent the necessary atoms to form a ring;
R²⁰ represents H, CN, NR²³R²⁴, OR²³, OCOR²³, OCO₂R²³, OCONR²³R²⁴, OSO₂R²³, OP(O)(OR²³)(OR²⁴), an alkyl group, an alkenyl group, an alkynyl group or an aryl group;
R²¹ and R²² independently represent a heterocyclic ring, an electron withdrawing group or R²¹ and R²² together with the atoms to which they are attached represent the necessary atoms to form a ring;
R²³ and R²⁴ independently represent hydrogen, an alkyl group, an alkenyl group, an alkynyl group, an aryl group, a heterocyclic ring or R²³ and R²⁴ together with the atoms to which they are attached represent the atoms necessary to form a heterocyclic ring.

2. A dye donor element according to claim 1 wherein said dye layer comprises a repeating sequence of at least two dye frames and at least one of said dye frames comprising a dye according formula (I).

3. A dye donor element according to claim 2 wherein said dye layer comprises a sequence of at least three dye frames having respectively a yellow, magenta and cyan color.

4. A method for making an image according to the thermal dye transfer process comprising the steps of :
- placing the dye layer of a dye donor element as defined in claim 1 in face-to-face relationship with a dye-image receiving layer of a receiver sheet;
- image-wise heating a thus obtained assemblage and
- separating said receiver sheet from said dye donor element.

## Patentansprüche

1. Farbstoffdonorelement zur Verwendung in thermischen Farbstoffübertragungsverfahren, wobei das Farbstoffdonorelement einen Träger und eine darüber vergossene Farbstoffschicht enthält, die ein polymeres Bindemittel und einen Farbstoff der folgenden allgemeinen Formel (I) enthält : 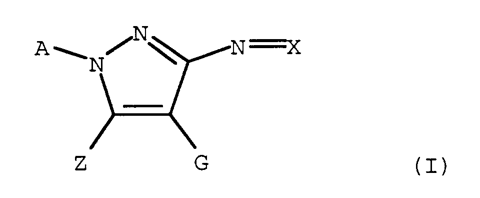 in der bedeuten :
X N-R oder 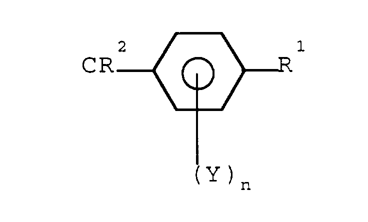 in der bedeuten :
R¹ NR³R⁴, OR¹² oder SR¹²,
R² ein Wasserstoffatom, eine Cyangruppe, COR¹³, CO₂R¹³, CONR¹⁴R¹⁵ oder SO₂R¹⁶, oder
R¹ und/oder R² und einer der Y-Substituenten zusammen mit den Atomen, an denen sie gebunden sind, die zur Bildung eines fünfgliedrigen oder sechsgliedrigen anellierten heterocyclischen Ringes benötigten Atome,
R NR³R⁴ oder eine Substanz der folgenden Formel : 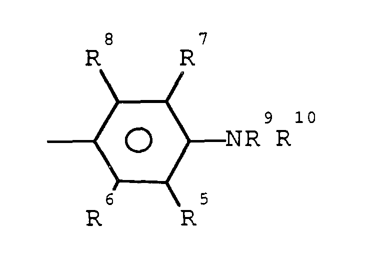 in der bedeuten :
R³ und R⁴ jeweils unabhängig voneinander ein Wasserstoffatom, eine Alkylgruppe, eine Alkenylgruppe, eine Alkynylgruppe, eine Arylgruppe, eine heterocyclische Gruppe oder R³ und R⁴ zusammen mit dem Stickstoffatom, an dem sie gebunden sind, die zur Vervollständigung eines heterocyclischen Ringes benötigten Atome,
R⁵, R⁶, R⁷ und R⁸ jeweils unabhängig voneinander ein Wasserstoffatom, eine Alkylgruppe, eine Alkenylgruppe, eine Alkynylgruppe, eine Arylgruppe, eine Alkoxygruppe, eine Alkylthiogruppe, eine Arylthiogruppe, eine Aryloxygruppe, eine Carbamoylgruppe, eine Sulfamoylgruppe, eine Hydroxylgruppe, SH, eine Aminogruppe, ein Halogenatom, NO₂, CN, NHSO₂R¹¹, NHCOR¹¹, OSO₂R¹¹, OCOR¹¹, COR¹¹,
oder R⁷ und R⁸ zusammen und/oder R⁵ und R⁶ zusammen mit den Atomen, an denen sie gebunden sind, die zur Vervollständigung eines Ringes benötigten Atome oder R⁷ und R⁹ zusammen mit den Atomen, an denen sie gebunden sind, und/oder R⁵ und R¹⁰ zusammen mit den Atomen, an denen sie gebunden sind, die zur Bildung eines heterocyclischen Ringes benötigten Atome,
R¹¹ eine Alkylgruppe, eine Alkenylgruppe, eine Alkynylgruppe, eine Arylgruppe, eine Alkyloxygruppe, eine Aryloxygruppe, eine Alkylthiogruppe, eine Arylthiogruppe, eine Aminogruppe oder eine heterocyclische Gruppe,
R⁹ und R¹⁰ jeweils unabhängig voneinander ein Wasserstoffatom, eine Alkylgruppe, eine Alkenylgruppe, eine Alkynylgruppe, eine Arylgruppe, eine heterocyclische Gruppe oder R⁹ und R¹⁰ zusammen mit den Atomen, an denen sie gebunden sind, die zur Bildung eines heterocyclischen Ringes benötigten Atome,
Y einen Substituenten,
n 0, 1, 2, 3 oder 4, wobei die Substituenten gleich oder verschieden sind, wenn n größer als 1 ist, oder zwei oder mehr Y-Substituenten ein anelliertes Ringsystem bilden können,
R¹², R¹³, R¹⁴ und R¹⁵ jeweils unabhängig voneinander ein Wasserstoffatom, eine Alkylgruppe, eine Alkenylgruppe, eine Alkynylgruppe, eine Arylgruppe, einen heterocyclischen Ring oder R¹⁴ und R¹⁵ zusammen mit den Atomen, an denen sie gebunden sind, die zur Bildung eines fünfgliedrigen oder sechsgliedrigen Ringes benötigten Atome, oder R¹² oder R¹³ oder R¹⁴ oder R¹⁵ zusammen mit einem der Y-Substituenten und den Atomen, an denen sie gebunden sind, die zur Bildung eines fünfgliedrigen oder sechsgliedrigen anellierten heterocyclischen Ringes benötigten Atome,
R¹⁶ eine Hydroxylgruppe, eine Alkoxygruppe, eine Aryloxygruppe, NR¹⁷R¹⁸, eine Arylgruppe, eine Alkylgruppe, eine Alkenylgruppe, eine Alkynylgruppe oder R¹⁶ zusammen mit. einem der Y-Substituenten und den Atomen, an denen sie gebunden sind, die zur Bildung eines fünfgliedrigen oder sechsgliedrigen anellierten heterocyclischen Ringes benötigten Atome,
R¹⁷ und R¹⁸ jeweils unabhängig voneinander ein Wasserstoffatom, eine Alkylgruppe, eine Alkenylgruppe, eine Alkynylgruppe, eine Arylgruppe, einen heterocyclischen Ring oder R¹⁷ und R¹⁸ zusammen mit den Atomen, an denen sie gebunden sind, die zur Bildung eines fünfgliedrigen oder sechsgliedrigen Ringes benötigten Atome,
A eine Alkylgruppe, eine Alkenylgruppe, eine Alkynylgruppe oder eine Arylgruppe,
G ein Wasserstoffatom, CN oder R¹⁹-C=B,
Z ein Wasserstoffatom, ein Halogenatom, CN, eine Alkylgruppe, eine Alkenylgruppe, eine Alkynylgruppe, eine Arylgruppe, eine Aminogruppe, eine Alkoxygruppe, eine Thioalkoxygruppe, eine Sulfongruppe oder G und Z zusammen mit den Atomen, an denen sie gebunden sind, die zur Bildung eines alicyclischen, aromatischen oder heteroaromatischen Ringes benötigten Atome,
B O, N-R²⁰ oder CR²¹R²²,
R¹⁹ ein Wasserstoffatom, eine Alkylgruppe, eine Alkenylgruppe, eine Alkynylgruppe, eine Arylgruppe, eine Aryloxygruppe, eine Alkoxygruppe wie eine Methoxygruppe oder Ethoxygruppe, eine Alkylthiogruppe, eine Aminogruppe, eine elektronenanziehende Gruppe oder R¹⁹ und R²¹, R²² oder R²⁰ zusammen mit den Atomen, an denen sie gebunden sind, die zur Bildung eines Ringes benötigten Atome,
R²⁰ H, CN, NR²³R²⁴, OR²³, OCOR²³, OCO₂R²³, OCONR²³R²⁴, OSO₂R²³, OP(O)(OR²³)(OR²⁴), eine Alkylgruppe, eine Alkenylgruppe, eine Alkynylgruppe oder eine Arylgruppe,
R²¹ und R²² jeweils unabhängig voneinander einen heterocyclischen Ring, eine elektronenanziehende Gruppe oder R²¹ und R²² zusammen mit den Atomen, an denen sie gebunden sind, die zur Bildung eines Ringes benötigten Atome,
R²³ und R²⁴ jeweils unabhängig voneinander ein Wasserstoffatom, eine Alkylgruppe, eine Alkenylgruppe, eine Alkynylgruppe, eine Arylgruppe, einen heterocyclischen Ring, oder R²³ und R²⁴ zusammen mit den Atomen, an denen sie gebunden sind, die zur Bildung eines heterocyclischen Ringes benötigten Atome.

2. Farbstoffdonorelement nach Anspruch 1, dadurch gekennzeichnet, daß die Farbstoffschicht eine sich wiederholende Reihe von zumindest drei Farbstoffbereichen enthält und wenigstens einer der Farbstoffbereiche einen Farbstoff der Formel (I) enthält.

3. Farbstoffdonorelement nach Anspruch 2, dadurch gekennzeichnet, daß die Farbstoffschicht eine Reihe von wenigstens drei Farbstoffbereichen mit einer Gelb-, Magenta- und Cyanfarbe enthält.

4. Ein durch die folgenden Schritte gekennzeichnetes Verfahren zur Erzeugung eines Bildes gemäß dem thermischen Farstoffübertragungsverfahren :
- das Anordnen der Farbstoffschicht eines wie in Anspruch 1 definierten Farbstoffdonorelements in schichtseitiger Beziehung zu einer Farbstoffbildempfangsschicht eines Empfangsbogens,
- die bildmäßige Erhitzung einer so erhaltenen Anordnung und
- das Abtrennen des Empfangsbogens vom Farbstoffdonorelement.

## Revendications

1. Élément donneur de colorant pour utilisation selon des méthodes de transfert thermique de colorant, ledit élément donneur de colorant comprenant un support portant dessus une couche de colorant contenant un liant polymère et un colorant répondant à la formule générale
ci-après (I) : 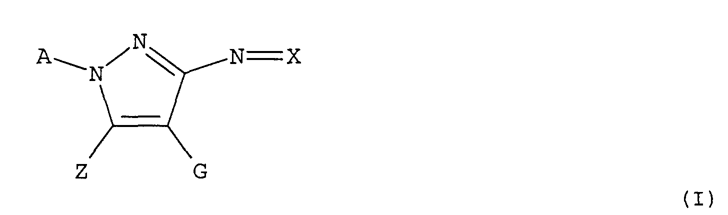 dans laquelle :
X représente N-R ou 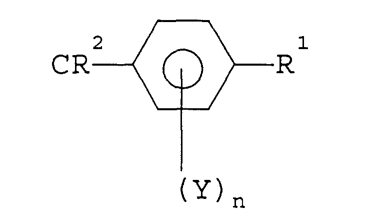
R¹ représente NR³R⁴, OR¹² ou SR¹² ;
R² représente un atome d'hydrogène, un groupement cyano, COR¹³, CO₂R¹³, CONR¹⁴R¹⁵ ou SO₂R¹⁶ ; ou
R¹ et/ou R² et l'un des substituants Y conjointement avec les atomes auxquels ils sont fixés représentent les atomes nécessaires pour constituer un noyau pentagonal ou hexagonal, hétérocyclique, condensé ;
R représente NR³R⁴ ou la formule ci-après : 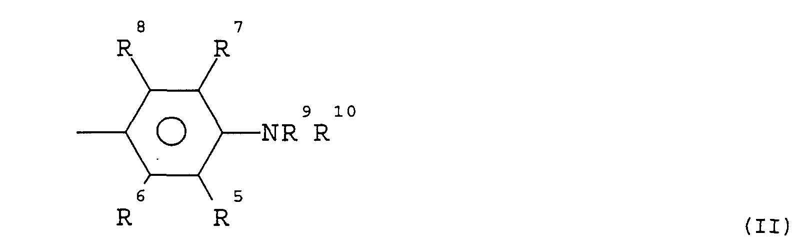 dans laquelle R³ et R⁴ représentent chacun indépendamment l'un de l'autre un atome d'hydrogène, un groupement alkyle, un groupement alcényle, un groupement alcynyle, un groupement aryle, un groupement hétérocyclique, ou R³ et R⁴ conjointement avec l'atome d'azote auquel ils sont fixés représentent les atomes nécessaires pour compléter un noyau hétérocyclique ;
R⁵, R⁶, R⁷, et R⁸ représentent chacun indépendamment l'un de l'autre un atome d'hydrogène, un groupement alkyle, un groupement alcényle, un groupement alcynyle, un groupement aryle, un groupement alcoxy, un groupement alkylthio, un groupement arylthio, un groupement aryloxy, un groupement carbamoyle, un groupement sulfamoyle, un groupement hydroxyle, SH, un groupement amino, un atome d'halogène, NO₂, CN, NHSO₂R¹¹, NHCOR¹¹, OSO₂R¹¹, OCOR¹¹, COR¹¹ ;
ou R⁷ et R⁸ ensemble et/ou R⁵ et R⁶ conjointement avec les atomes auxquels ils sont fixés représentent les atomes nécessaires pour compléter un noyau, ou R⁷ et R⁹ conjointement avec les atomes auxquels ils sont fixés, et/ou R⁵ et R¹⁰ conjointement avec les atomes auxquels ils sont fixés représentent les atomes nécessaires pour constituer un noyau hétérocyclique ;
R¹¹ représente un groupement alkyle, un groupement alcényle, un groupement alcynyle, un groupement aryle, un groupement alkyloxy, un groupement aryloxy, un groupement alkylthio, un groupement arylthio, un groupement amino ou un groupement hétérocyclique ;
R⁹ et R¹⁰ représentent chacun indépendamment l'un de l'autre un atome d'hydrogène, un groupement alkyle, un groupement alcényle, un groupement alcynyle, un groupement aryle, un groupement hétérocyclique, ou R⁹ et R¹⁰ conjointement avec les atomes auxquels ils sont fixés représentent les atomes nécessaires pour constituer un noyau hétérocyclique ;
Y représente un substituant ;
n représente 0, 1, 2, 3 ou 4, les substituants étant identiques ou différents, lorsque n est supérieur à 1, ou deux ou plusieurs substituants Y peuvent constituer un système à noyau condensé ;
R¹², R¹³, R¹⁴ et R¹⁵ représentent chacun indépendamment l'un de l'autre un atome d'hydrogène, un groupement alkyle, un groupement alcényle, un groupement alcynyle, un groupement aryle, un noyau hétérocyclique, ou R¹⁴ et R¹⁵ conjointement avec les atomes auxquels ils sont fixés représentent les atomes nécessaires pour constituer un noyau pentagonal ou hexagonal, ou R¹² ou R¹³ ou R¹⁴ ou R¹⁵ conjointement avec l'un des substituants Y et les atomes auxquels ils sont fixés représentent les atomes nécessaires pour constituer un noyau pentagonal ou hexagonal, hétérocyclique, condensé ;
R¹⁶ représente un groupement hydroxyle, un groupement alcoxy, un groupement aryloxy, NR¹⁷R¹⁸, un groupement aryle, un groupement alkyle, un groupement.alcényle, un groupement alcynyle, ou R¹⁶ conjointement avec l'un des substituants Y et les atomes auxquels ils sont fixés représentent les atomes nécessaires pour constituer un noyau pentagonal ou hexagonal, hétérocyclique, condensé ;
R¹⁷ et R¹⁸ représentent chacun indépendamment l'un de l'autre un atome d'hydrogène, un groupement alkyle, un groupement alcényle, un groupement alcynyle, un groupement aryle, un noyau hétérocyclique, ou R¹⁷ et R¹⁸ conjointement avec les atomes auxquels ils sont fixés représentent les atomes nécessaires pour constituer un noyau pentagonal ou hexagonal ;
A représente un groupement alkyle, un groupement alcényle, un groupement alcynyle ou un groupement aryle ;
G représente un atome d'hydrogène, CN ou R¹⁹-C=B ;
Z représente un atome d'hydrogène, un atome d'halogène, CN, un groupement alkyle, un groupement alcényle, un groupement alcynyle, un groupement aryle, un groupement amino, un groupement alcoxy, un groupement thioalcoxy, un groupement sulfone, ou G et Z conjointement avec les atomes auxquels ils sont fixés représentent les atomes nécessaires pour constituer un noyau alicyclique, aromatique ou hétéroaromatique ;
B représente O, N-R²⁰, CR²¹R²² ;
R¹⁹ représente un atome d'hydrogène, un groupement alkyle, un groupement alcényle, un groupement alcynyle, un groupement aryle, un groupement aryloxy, un groupement alcoxy, tel qu'un groupement méthoxy ou éthoxy, un groupement alkylthio, un groupement amino, un groupement accepteur d'électrons, ou R¹⁹ et R²¹, R²² ou R²⁰ conjointement avec les atomes auxquels ils sont fixés représentent les atomes nécessaires pour constituer un noyau ;
R²⁰ représente H, CN, NR²³R²⁴, OR²³, OCOR²³, OCO₂R²³, OCONR²³R²⁴, OSO₂R²³, OP(O) (OR²³) (OR²⁴), un groupement alkyle, un groupement alcényle, un groupement alcynyle ou un groupement aryle ;
R²¹ et R²² représentent chacun indépendamment l'un de l'autre un noyau hétérocyclique, un groupement accepteur d'électrons, ou R²¹ et R²² conjointement avec les atomes auxquels ils sont fixés représentent les atomes nécessaires pour constituer un noyau ;
R²³ et R²⁴ représentent chacun indépendamment l'un de l'autre un atome d'hydrogène, un groupement alkyle, un groupement alcényle, un groupement alcynyle, un groupement aryle, un noyau hétérocyclique, ou R²³ et R²⁴ conjointement avec les atomes auxquels ils sont fixés représentent les atomes nécessaires pour constituer un noyau hétérocyclique.

2. Elément donneur de colorant selon la revendication 1, caractérisé en ce que ladite couche de colorant comprend une série récurrente d'au moins deux cadres à colorant et en ce qu'au moins l'un desdits cadres à colorant comprend un colorant conforme à la formule (I).

3. Elément donneur de colorant selon la revendication 2, caractérisé en ce que ladite couche de colorant comprend une série d'au moins trois cadres à colorant possédant une couleur resp. jaune, magenta et bleu-vert.

4. Procédé de formation d'images conformément au procédé de transfert thermique de colorant comprenant les étapes consistant à :
- mettre la couche de colorant d'un élément donneur de colorant tel que défini dans la revendication 1 et une couche réceptrice d'image d'une feuille réceptrice en contact face à face ;
- chauffer selon une image un assemblage ainsi obtenu et
- séparer ladite feuille réceptrice et ledit élément donneur de colorant.
